# EUROPEAN PATENT SPECIFICATION

(11) **EP 2 948 258 B1**
(45) Date of publication and mention of the grant of the patent: **07.03.2018**
(21) Application number: 14703011.8
(22) Date of filing: 20.01.2014
(51) Int. Cl.: B21B 31/07

(54) **SEAL ASSEMBLY FOR ROLLING MILL**
DICHTUNGSANORDNUNG FÜR WALZWERK
ENSEMBLE D'ÉTANCHÉITÉ POUR LAMINOIR

(30) Priority: 25.01.2013 US 201361756506 P
(43) Date of publication of application: 02.12.2015
(73) Proprietor: Primetals Technologies USA LLC, Alpharetta, GA 30005 (US)
(72) Inventor: JOHANSON, Eric L., Worcester, Massachusetts 01605 (US); WINSLOW Jr., Earl S., Grafton, Massachusetts 01519 (US); PALFREMAN, Matthew D., Charlton, Massachusetts 01507 (US); WOJTKOWSKI Jr., Thomas C., Shrewsbury, Massachusetts 01545 (US); OSGOOD, Peter N., Westborough, Massachusetts 01581 (US)
(74) Representative: Metals@Linz
(86) International application number: PCT/US2014/012168
(87) International publication number: WO 2014/116531

(56) References cited:
- EP-A1- 1 442 804
- WO-A1-03/078085
- WO-A1-2008/092616
- US-A- 2 860 931
- US-A1- 2011 274 380

## Description

### CROSS REFERENCE TO RELATED APPLICATION

### BACKGROUND

### 1. Field of the Invention

Aspects of the present invention relate generally to a seal assembly for an oil film bearing in a rolling mill according to the preamble of claim 1 as known from US 2011/0274380 A1.

### 2. Description of Related Art

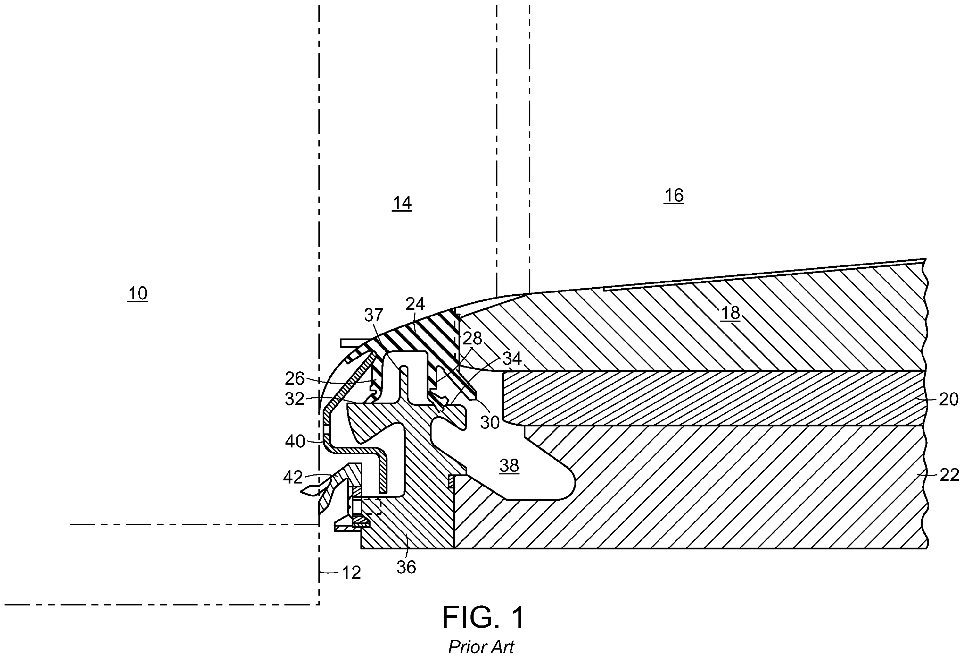

With reference to Fig. 1, a known oil film bearing assembly is shown comprising a roll 10 having an end face 12 and a tapered neck section 14 leading to a reduced tapered diameter 16 surrounded by a sleeve 18. The sleeve 18 is fixed to the roll 10 by a key or other device (not shown) for rotation within a bushing 20 contained by and fixed relative to a roll stand chock 22.

A flexible neck seal 24 is mounted on the tapered roll section 14 for rotation therewith. The seal 24 has a circular body and is held in place between the sleeve 18 and the roll taper 14.

Inboard and outboard flanges 26, 28 project radially outwardly from the seal body. As herein employed, the term "inboard" means a component closest to the roll end face 12, and the term "outboard" means a component closest to the bushing 6 and chock 22. A flinger 30 projects angularly toward the chock 22.

The inboard and outboard flanges 26, 28 have oppositely directed lip seals arranged to contact annular inboard and outboard sealing surfaces 32, 34 of a seal end plate 36. The seal end plate is fixed to and cooperates with the chock 22 to create a sump 38. The annular sealing surfaces 32, 34 of the seal end plate 36 are separated by an inwardly projecting circular flange 37 serving as a mechanical dam. A seal inner ring 40 and a coolant guard 42 complete the seal assembly.

In operation the roll 10, neck seal 24, seal inner ring 40, and sleeve 18 rotate together while the bushing 20, chock 22, seal end plate 36, and coolant guard 42 remain static. Oil is supplied between the sleeve 18 and bushing 20. This oil is formed into a thin lubricating film at the bearing load zone before emerging between the sleeve 18 and bushing 20 for collection in the sump 38.

The flinger 30 and outboard flange 28 serve to retain the oil in the bearing, whereas the coolant guard 42, inner seal ring 40, and inboard flange 26 serve to exclude the external contaminates from penetrating to the bearing.

### SUMMARY

Briefly described, aspects of the present invention relate to a seal assembly for an oil film bearing in a rolling mill according to claim 1. In accordance with exemplary embodiments, and in comparison to the conventional seal and sealing arrangement depicted in Fig. 1, the seal and seal end plate of the present invention have decreased widths, thereby making it possible to either increase the width of the roll barrel, or to employ alternative bearing geometries within the same roll stand in order to improve the roll stand's load capacity.

The decreased widths of the seal and seal end plate is made possible by eliminating the flange 37 of the conventional seal plate in favor of a stepped interior defining inboard and outboard sealing surfaces, with the outboard sealing surface having a diameter larger than the diameter of the inboard sealing surface, and with both sealing surfaces being connected by and annular dam surface. The seal is correspondingly reconfigured to provide an outboard sealing flange having an outer diameter larger than the outer diameter of the inboard sealing flange.

These and other features and advantages of the present invention will now be presented as dependent claims as well as described in more detail with reference to the accompanying drawings, wherein:

### BRIEF DESCRIPTION OF THE DRAWINGS

Fig. 1 is a partial cross sectional view of a conventional oil film bearing assembly; and
Fig. 2 is a partial cross sectional view of an oil film bearing assembly and seal, in accordance with exemplary embodiments of the present invention.

### DETAILED DESCRIPTION

To facilitate an understanding of the embodiments, principles, and features of the present invention, they are explained hereinafter with reference to the implementation in illustrative embodiments. In particular, they are described in the context of being a seal assembly and neck seal for an oil film bearing in a rolling mill.

The components and materials described hereinafter as making up the various embodiments are intended to be illustrative and not restrictive. Many suitable components and materials that would perform the same or a similar function as the materials and components described herein are intended to be embraced within the scope of embodiments of the present invention.

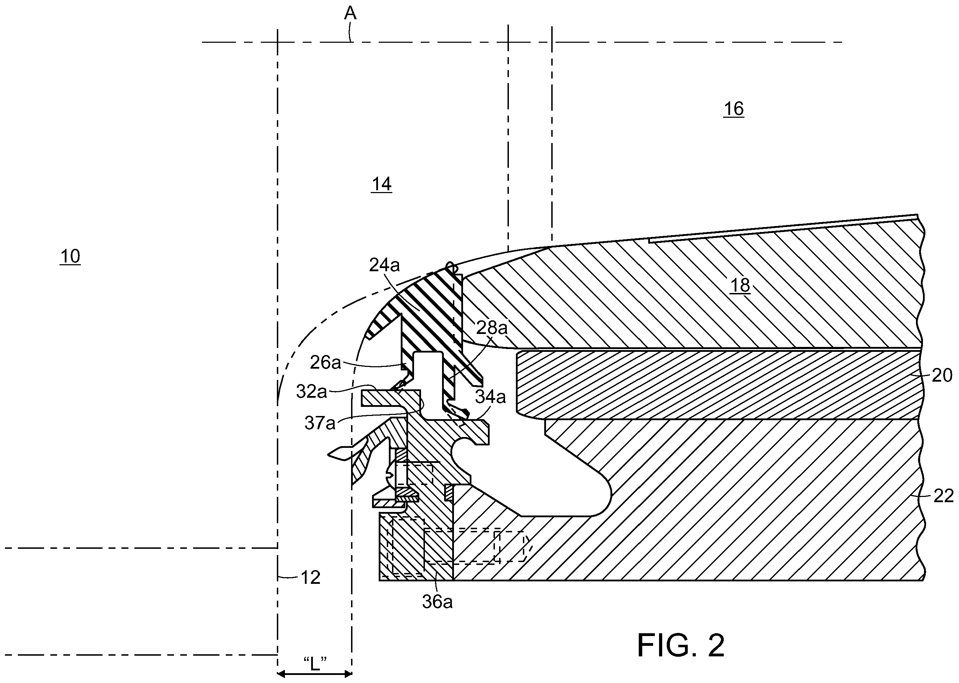

Fig. 2 illustrates an oil film bearing assembly and neck seal in accordance with exemplary embodiments of the present invention. The seal end plate 36a is reconfigured with a stepped interior defining inboard and outboard annular sealing surfaces 32a, 34a, connected by an annular dam surface 37a. The diameter of the outboard sealing surface 34a is larger than the diameter of the inboard sealing surface 32a. Both sealing surfaces 32a, 32b are preferably parallel to the axis "A" of rotation of the roll 10, with the dam surface 37a preferably being perpendicular to the axis A.

The neck seal 24a is correspondingly reconfigured with the outer diameter of the outboard flange 28a being larger than that of the inboard flange 26a.

These reconfigured geometries of the neck seal 24a and seal end plate 36a make it possible to eliminate the flange 37 of the conventional seal end plate 36, which in turn allows the widths of both the neck seal and the seal end plate to be beneficially reduced.

There are many advantages of this arrangement. For example and not limitation, and in no particular order, first, the reduced widths of the neck seal and seal end plate allow for the potential increase in the width of the roll 10 (shown at "L" in Fig. 2) in the same rolling mill stand with its obvious benefits to the mill user. Second, alternatively, the standard roll width can be maintained, with the reduced widths of the seal and seal end plate being utilized for alternate bearing geometries within the same rolling mill stand designed to improve the load capacity of the roll stand. Third, the reconfigured seal assembly simplifies manufacture and assembly of the seal components.

While embodiments of the present invention have been disclosed in exemplary forms, it will be apparent to those skilled in the art that many modifications, additions and deletions can be made therein without departing from the scope of the invention as set forth in the following claims.

## Claims

1. Seal assembly for an oil film bearing configured and arranged to rotatebly support a neck of a roll (10) in a rolling mill, said seal assembly comprising a fixed circular seal end plate (36a) surrounding a flexible seal (24a) carried on the roll neck for rotation therewith, said real end plate having an interior defining inboard and outboard sealing surfaces (32a, 34a), said outboard sealing surface having a diameter larger than the diameter of said inboard sealing surface, said flexible seal having radially projecting inboard and outboard flanges (26a, 28a) respectively configured and dimensioned to contact said inboard and outboard surfaces, **characterized in that**: said seal end plate (36a) having a stepped interior defining said inboard and outboard sealing surfaces (32a, 34a) wherein a dam surface (37a) extends between said inboard and outboard sealing surfaces (32a, 34a).

2. Seal assembly of claim 1 wherein said inboard and outboard sealing surfaces are parallel to the axis of rotation of said roll neck, and wherein said dam surface is perpendicular to said axis.

3. Seal assembly of claim 1 or 2, wherein the flexible neck seal (24a) is adapted for use in a tapered neck section (14) of the roll (10) in said rolling mill, said neck comprising:
a circular body having a tapered bore configured and dimensioned to accommodate axial mounting of said neck seal on said tapered neck section; and said neck seal having a configuration adapted to establish a sealing relationship with said encircling seal end plate (36a), said seal end plate having a stepped interior defining inboard and outboard sealing surfaces (32a, 34a) dimensioned for contact by the inboard and outboard flanges of said neck seal.

4. Seal assembly of claim 3, wherein the said inboard and outboard flanges terminate in flexible sealing lips.

5. Seal assembly of one of claims 1-4 wherein said roll having a neck with an intermediate section (14) tapering from an end face (12) of the roll to a reduced diameter end section (16) contained within a sleeve (18), the sleeve being fixed in relation to the neck and being journalled for rotation in a bushing (20) contained within a chock (22), said seal assembly comprising:
said flexible seal (24a) mounted on the intermediate section of the roll neck for rotation with the roll and within said circular seal end plate (36a) fixed to the chock.

6. Seal assembly of claim 1 wherein said inboard and outboard sealing surfaces are parallel to the axis of rotation of said roll.

7. Seal assembly of claim 1 wherein said dam surface is perpendicular to the axis of rotation of said roll.

## Patentansprüche

1. Dichtungsanordnung für ein Ölfilmlager, die dazu konfiguriert und angeordnet ist, den Hals einer Walze (10) in einem Walzwerk drehbar zu stützen, wobei die Dichtungsanordnung eine fixierte kreisförmige Dichtungsendplatte (36a) umfasst, die eine flexible Dichtung (24a) umgibt, die auf dem Walzenhals zur Drehung damit getragen wird, wobei die Dichtungsendplatte ein Inneres aufweist, das eine innenliegende und eine außenliegende Dichtungsfläche (32a, 34a) definiert, wobei die außenliegende Dichtungsfläche einen Durchmesser aufweist, der größer als der Durchmesser der innenliegenden Dichtungsfläche ist, wobei die flexible Dichtung einen innenliegenden und einen außenliegenden Flansch (26a, 28a), die radial vorragen, aufweist, die jeweils dazu konfiguriert und dahingehend dimensioniert sind, die innenliegende und die außenliegende Fläche zu berühren,
**dadurch gekennzeichnet, dass**: die Dichtungsendplatte (36a) ein abgestuftes Inneres aufweist, das die innenliegende und die außenliegende Dichtungsfläche (32a, 34a) definiert, wobei sich eine Dammfläche (37a) zwischen der innenliegenden und der außenliegenden Dichtungsfläche (32a, 34a) erstreckt.

2. Dichtungsanordnung nach Anspruch 1, wobei die innenliegende und die außenliegende Dichtungsfläche zur Drehachse des Walzenhalses parallel sind und wobei die Dammfläche zur Achse senkrecht ist.

3. Dichtungsanordnung nach Anspruch 1 oder 2, wobei die flexible Halsdichtung (24a) zur Verwendung bei einem konischen Halsbereich (14) der Walze (10) in dem Walzwerk ausgeführt ist, wobei der Hals Folgendes umfasst:
einen kreisförmigen Körper mit einer Kegelbohrung, die dazu konfiguriert und dahingehend dimensioniert ist, eine axiale Befestigung der Halsdichtung an dem konischen Halsbereich aufzunehmen; und
wobei die Halsdichtung eine Konfiguration aufweist, die dazu ausgelegt ist, eine abdichtende Beziehung mit der umschließenden Dichtungsendplatte (36a) herzustellen,
wobei die Dichtungsendplatte ein abgestuftes Inneres aufweist, das die innenliegende und die außenliegende Dichtungsfläche (32a, 34a) definiert, die zur Berührung durch den innenliegenden und den außenliegenden Flansch der Halsdichtung dimensioniert sind.

4. Dichtungsanordnung nach Anspruch 3, wobei der innenliegende und der außenliegende Flansch in flexiblen Dichtungslippen enden.

5. Dichtungsanordnung nach einem der Ansprüche 1-4, wobei die Walze einen Hals mit einem Zwischenbereich (14) aufweist, der sich von einer Endseite (12) der Walze zu einem in einer Hülse (18) enthaltenen Endbereich (16) mit reduziertem Durchmesser hin verjüngt, wobei die Hülse bezüglich des Halses fixiert und zur Drehung in einer in einem Einbaustück (22) enthaltenen Lagerbuchse (20) gelagert ist, wobei die Dichtungsanordnung Folgendes umfasst:
die flexible Dichtung (24a), die an dem Zwischenbereich des Walzenhalses zur Drehung mit der Walze und in der an dem Einbaustück fixierten kreisförmigen Dichtungsendplatte (36a) befestigt ist.

6. Dichtungsanordnung nach Anspruch 1, wobei die innenliegende und die außenliegende Dichtungsfläche zur Drehachse der Walze parallel sind.

7. Dichtungsanordnung nach Anspruch 1, wobei die Dammfläche zur Drehachse der Walze senkrecht ist.

## Revendications

1. Ensemble joint pour un palier à film d'huile configuré et agencé pour soutenir en rotation un tourillon d'un cylindre (10) dans un laminoir, ledit ensemble joint comprenant une plaque d'extrémité de joint circulaire fixe (36a) entourant un joint souple (24a) porté sur le tourillon de cylindre pour tourner avec celui-ci, ladite plaque d'extrémité de joint ayant un intérieur définissant des surfaces d'étanchéité interne et externe (32a, 34a), ladite surface d'étanchéité externe ayant un diamètre supérieur au diamètre de ladite surface d'étanchéité interne, ledit joint souple ayant des brides interne et externe faisant saillie radialement (26a, 28a) respectivement configurées et dimensionnées pour entrer en contact avec lesdites surfaces interne et externe, **caractérisé en ce que** : ladite plaque d'extrémité de joint (36a) ayant un intérieur étagé définissant lesdites surfaces d'étanchéité interne et externe (32a, 34a) dans lequel une surface de digue (37a) s'étend entre lesdites surfaces d'étanchéité interne et externe (32a, 34a).

2. Ensemble joint selon la revendication 1 dans lequel lesdites surfaces d'étanchéité interne et externe sont parallèles à l'axe de rotation dudit tourillon de cylindre, et dans lequel ladite surface de digue est perpendiculaire audit axe.

3. Ensemble joint selon la revendication 1 ou la revendication 2, dans lequel le joint de tourillon souple (24a) est adapté à être utilisé dans une section de tourillon conique (14) du cylindre (10) dans ledit laminoir, ledit tourillon comprenant :
un corps circulaire ayant un alésage conique configuré et dimensionné pour rendre possible le montage axial dudit joint de tourillon sur ladite section de tourillon conique ; et
ledit joint de tourillon ayant une configuration adaptée à établir une relation d'étanchéité avec ladite plaque d'extrémité de joint d'encerclement (36a),
ladite plaque d'extrémité de joint ayant un intérieur étagé définissant des surfaces d'étanchéité interne et externe (32a, 34a) dimensionnées pour entrer en contact avec les brides interne et externe dudit joint de tourillon.

4. Ensemble joint selon la revendication 3, dans lequel lesdites brides interne et externe se terminent par des lèvres d'étanchéité souples.

5. Ensemble joint selon l'une des revendications 1 à 4 dans lequel ledit cylindre ayant un tourillon avec une section intermédiaire (14) s'effilant depuis une face d'extrémité (12) du cylindre jusqu'à une section d'extrémité de diamètre réduit (16) contenu au sein d'un manchon (18), le manchon étant fixe par rapport au tourillon et étant tourillonné pour tourner dans une douille (20) contenue au sein d'une cale (22), ledit ensemble joint comprenant :
ledit joint souple (24a) monté sur la section intermédiaire du tourillon de cylindre pour tourner avec le cylindre et au sein de ladite plaque d'extrémité de joint circulaire (36a) fixée sur la cale.

6. Ensemble joint selon la revendication 1 dans lequel lesdites surfaces d'étanchéité interne et externe sont parallèles à l'axe de rotation dudit cylindre.

7. Ensemble joint selon la revendication 1 dans lequel ladite surface de digue est perpendiculaire à l'axe de rotation dudit cylindre.
